(19) Europäisches Patentamt
European Patent Office
Office européen des brevets

(11) EP 1 784 823 B1

# (12) EUROPEAN PATENT SPECIFICATION

(45) Date of publication and mention of the grant of the patent:
**21.05.2008 Bulletin 2008/21**

(21) Application number: **05781057.4**

(22) Date of filing: **19.08.2005**

(51) Int Cl.:
***G11B 7/09*** *(2006.01)* ***G11B 23/40*** *(2006.01)*
***B41J 3/407*** *(2006.01)*

(86) International application number:
**PCT/IB2005/052738**

(87) International publication number:
**WO 2006/021919 (02.03.2006 Gazette 2006/09)**

(54) **FOCUS CONTROL FOR A MEDIUM SCANNING SYSTEM**

FOKUSSTEUERUNG FÜR EIN MEDIENABTASTSYSTEM

COMMANDE DE MISE AU POINT D'UN SYSTEME DE BALAYAGE DE MILIEUX

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.08.2004 EP 04104044**
**27.08.2004 EP 04104116**
**07.12.2004 EP 04106346**

(43) Date of publication of application:
**16.05.2007 Bulletin 2007/20**

(73) Proprietor: **Koninklijke Philips Electronics N.V.
5621 BA Eindhoven (NL)**

(72) Inventor: **RAAYMAKERS, Jeroen, A., L., J.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 1 439 537**
**US-B1- 6 192 010**
**US-B1- 6 490 234**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 784 823 B1

## Description

The invention relates to a device for scanning a medium via a beam of radiation, the device comprising a head for providing the beam of radiation, and for generating at least one detector signal in dependence of radiation reflected from the medium, and focus means for generating a focus control signal for focusing the beam of radiation to a spot on the medium.

The invention further relates to a method of scanning a medium via a beam of radiation, the method comprising generating at least one detector signal in dependence of radiation reflected from the medium, and generating a focus control signal for focusing the beam of radiation to a spot on the medium.

The invention relates to the field of focusing a beam of radiation, and in particular to a method of and an apparatus for writing a label on the label side of a label-bearing medium, and focusing a laser on the label side of a label-bearing medium.

The patent application US 2004/0037176 describes an optical disc device and a method of printing a label on an optical disc. The label is created by utilization of a laser beam output from a head of the optical disc device. It is noted that in the current document the word scribing is used for indicating the process of changing the visible light characteristic of a radiation sensitive layer for creating a visible label on a record carrier. In optical recording devices the information is stored on a record carrier by writing marks in a track. The optical recording device is equipped with a head to focus a laser beam into a scanning spot on a track on a recording layer of the record carrier. During recording the head is radially positioned on the track via a servo system based on a radial error signal based on detector signals generated from a detector in the head based on radiation reflected from the record carrier.

In the known document printing a label via the head is described. A visible light characteristic changing layer formed from photosensitive or heat-sensitive material is formed in a location which can be viewed from a part of a label surface of an optical disk. The optical disk is set on a turntable of an optical disk unit while the label surface of the optical disk is directed towards an optical head. The optical disk and head are moved mutually in a scanning operation to cover a label area along the plane of the optical disk. In synchronism with the scanning, the power of a laser beam output from the optical pickup is modulated in accordance with image data, such as characters or graphic images to be printed, and the laser beam is emitted onto the visible light characteristic changing layer. As a result of the visible light characteristic changing layer being exposed to the laser beam, a visible-light reflectivity of the visible light characteristic changing layer is changed, thereby forming an image corresponding to the image data on the label surface.

During said scanning the laser beam is focused to a spot on the medium. A difference between focusing on a blank side of a disc having a radiation sensitive layer, e.g. a "blank" writable label, and focusing on a conventional data recording layer, is that on the blank side generally no focus error signal is available to focus the laser spot onto the label surface. Focusing is based on detecting a maximum amount of reflected radiation from the medium. A problem of the known system of scanning is that the focusing by detecting said amount is slow and not very accurate, which may result in a printing quality of the label that is not constant.

Document US 6,490,234 describes an optical disc drive. A servo mechanism uses a detection signal with respect to a focusing error. A maximum value of the detection signal indicates the optimal focusing. A search wave form, e.g. a ramp signal is generated, and a maximum detection signal value is detected near the just focus point and stored as the optimal focus correction signal.

Document US 6,192,010 describes a method for adjusting a pickup head for finding an optimal focus an optical disc drive. Successive bias levels are applied to the focus signal. The focus point is detected by detecting the maximum detection signal.

Therefore it is an object of the invention to provide a device and method for scanning a medium while reliably focusing.

According to a first aspect of the invention the object is achieved with a device as defined in claim 1.

According to a second aspect of the invention the object is achieved with a method as defined in claim 11.

The focus correction signal is a signal to be applied to a focus actuator so that the focus point of the beam of radiation closely follows the surface of the medium to be scanned, i.e. the focus correction signal corresponds to the height variations of the medium. Detecting the center of gravity involves combining detector signal elements based on the values of the focus excitation signal, and assigning a weight to the detector signal element in dependence on the actual value of the focus excitation signal. The position of the center of gravity indicates the difference between the focus point and the surface. The measures have the effect of increasing the reliability of the focus control signal, because disturbances of individual parts of the detector signal, such as noise, are assigned a relative weight and are combined. This has the advantage that a reliable focus signal is created.

The invention is also based on the following recognition. In focusing systems a focus setpoint may be detected by varying the focus control signal and detecting a maximum amount of reflected radiation in a detector signal. For example a slow ramp signal may be used initially as the focus control signal. However, in such a focus control system, it is difficult to control or verify the detected setpoint, because there is no known relation between the deviation of the amount of reflected radiation and the amount of focus correction signal required. The inventors have seen that, by including the predetermined focus excitation signal in the focus control signal, and detecting the center of gravity in the detector signal, wherein the weight of the detector signal is determined in dependence of the focus excitation signal, the position of the center of gravity is directly related to the amplitude of the focus excitation signal. Thereby the amount of correction required, as a signal value, is derivable from such calculation. Note that the actual amount of focus displacement remains unknown due to various unknown parameters, such as a transfer function of a focus actuator. However, advantageously, the value of the required focus correction signal directly follows from the relation of the detected center of gravity and the predefined focus excitation signal.

In an embodiment the device is for, in a label mode, scribing a visible label on the medium, the medium having a label side provided with a radiation sensitive layer for creating the visible label via the beam of radiation, and the head is for generating the spot on the radiation sensitive layer for scribing the visible label.

It is to be noted that in a device for recording user data on optical discs the optical head and detector are necessarily designed to generate a scanning spot on a data recording layer via a substrate layer of known optical properties. For example, the optical elements are designed to compensate a known amount of spherical aberration caused by the substrate. The detector signals for controlling focusing are designed for following a track on such a buried recording layer. However, in label scribing, the label surface does not have tracks, and the beam does not pass a substrate layer. Nevertheless the inventors have seen that detector signals occurring while a scribing spot is generated on the flat label sensitive layer can unexpectedly be put to use for detecting focusing as described above. This has the advantage that, with software and limited or no additional circuitry, a conventional recording device can be enhanced with a reliable label scribing function.

In an embodiment of the device the focus excitation signal is a periodic focus excitation signal, in a particular case the periodic focus excitation signal substantially being a sinusoidal signal. This has the effect that a value for the center of gravity is determined periodically, e.g. on a flank of the periodic focus excitation signal. The substantially sinusoidal signal has the advantage that focusing elements, which inherently have a higher order dynamic response such as actuators, will substantially move according to the focus excitation signal and hence provide accurate values of the center of gravity.

In an embodiment of the device said detecting a center of gravity is based on an interval of the excitation signal, which interval is symmetrical with respect to a zero crossing of the excitation signal. The symmetrical interval results in a equal weight of detector signal elements for positive and negative parts of the focus excitation signal. This has the advantage that random disturbing elements will be suppressed.

Further preferred embodiments of the device and method according to the invention are given in the appended claims, disclosure of which is incorporated herein by reference.

These and other aspects of the invention will be apparent from and elucidated further with reference to the embodiments described by way of example in the following description and with reference to the accompanying drawings, in which

Fig. 1a shows a disc-shaped record carrier,
Fig. 1b shows a cross-section taken of the record carrier,
Fig. 1c shows a label on a record carrier,
Fig. 2 shows a recording device having label scribing,
Fig. 3 shows detecting a center of gravity,
Fig. 4 shows signals for detecting a center of gravity,
Fig. 5 shows a detector signal processing part,
Fig. 6 shows a tacho converter,
Fig. 7 shows a feed forward block,
Fig. 8 shows a gain model,
Fig. 9 shows an overview of a focus system,
Fig. 10 shows a digital implementation diagram of a feed forward branch,
Fig. 11 shows a digital implementation diagram of CA processing,
Fig. 12a shows a first simulation result after one iteration, Figure 12b shows a first simulation result after two iterations, Fig. 12c shows a first simulation result after four iterations, and after reduction of the focus excitation signal amplitude with a factor 2, and
Fig. 13 shows change in amplitude of harmonics.

In the Figures, elements which correspond to elements already described have the same reference numerals.

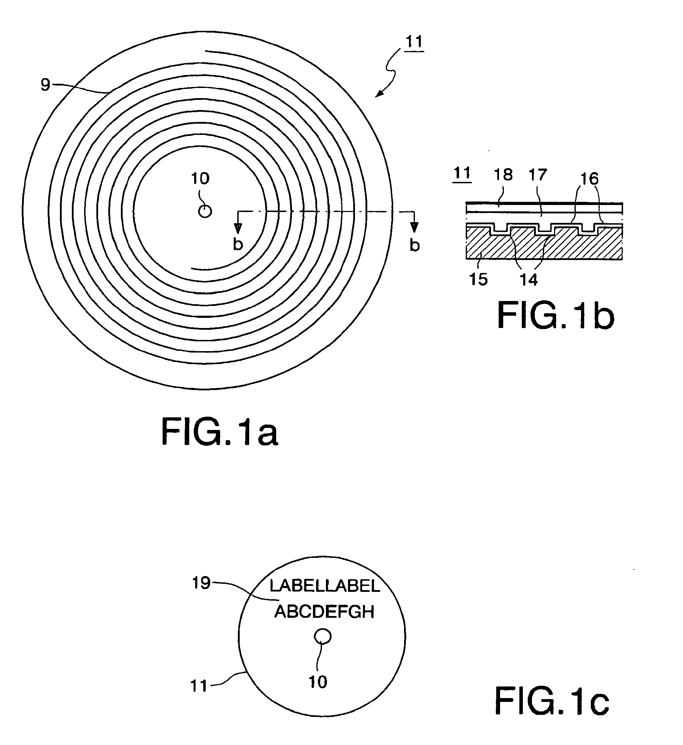

Figure 1a shows a disc-shaped record carrier. A cross-section is shown in Figure 1b, and Figure 1c shows a label side of the record carrier. The record carrier 11 has a track 9 on an information layer and a central hole 10. The track 9 is arranged in accordance with a spiral or concentrical pattern of turns constituting substantially parallel tracks on the information layer. The record carrier may be an optical disc having an information layer of a recordable type. Examples of a recordable disc are the CD-R and CD-RW, and the DVD-R or DVD+RW, and/or BD (Blu-ray Disc). The track 9 on the recordable type of record carrier is indicated by a pre-embossed track structure provided during manufacture of the blank record carrier, for example a pregroove. Recorded information is represented on the information layer by optically detectable marks recorded along the track. The marks are to be read, and optionally written, via a beam of radiation, e.g. a laser beam generated in an optical head in an optical disk drive. The marks are constituted by variations of one or more physical parameters and thereby have different optical properties than their surroundings, e.g. variations in reflection obtained when recording in materials such as dye, alloy or phase change material, or variations in direction of polarization, obtained when recording in magneto-optical material.

Figure 1b shows a cross-section taken along the line b-b of the record carrier 11 of the recordable type, in which a transparent substrate 15 is provided with a recording layer 16 and a protective layer 17. The track structure is constituted, for example, by a pregroove 14 which enables an optical head to follow the track 9 during scanning. The pregroove 14 may be implemented as an indentation or an elevation, or may consist of a material having a different optical property. A track structure may also be formed by regularly spread sub-tracks which periodically cause servo signals to occur. The record carrier may be intended to carry real-time information, for example video or audio information, or other information, such as computer data. On top of the protective layer 17 a label layer 18 is provided that is sensitive to radiation for scribing a visible label. Scribing is a process of changing the visible light characteristic of the radiation sensitive layer 18 for creating the visible label.

Figure 1c shows a label on a record carrier. The record carrier 11 is shown from the label side, and a visual label 19 has been scribed in the radiation sensitive layer. The visual label elements, e.g. black dots, are scribed in the label layer 18 by applying a scribing spot and scanning the label layer in radial and angular position while modulating the power of the beam of radiation. A system for scribing visible labels is for example known from US 2002/0191517.

Note that the examples are based on a record carrier that has the radiation sensitive label layer on a different side of the record carrier then the entry side for recording and reading information. However, a label layer of a suitable material may be located at the entry side. Such a label layer has to be at least partly transparent to the radiation for recording and reading information from the marks in the track. Furthermore, the label layer may only be applied to a part of the label side. Obviously label elements can only be scribed at the part covered by the label layer.

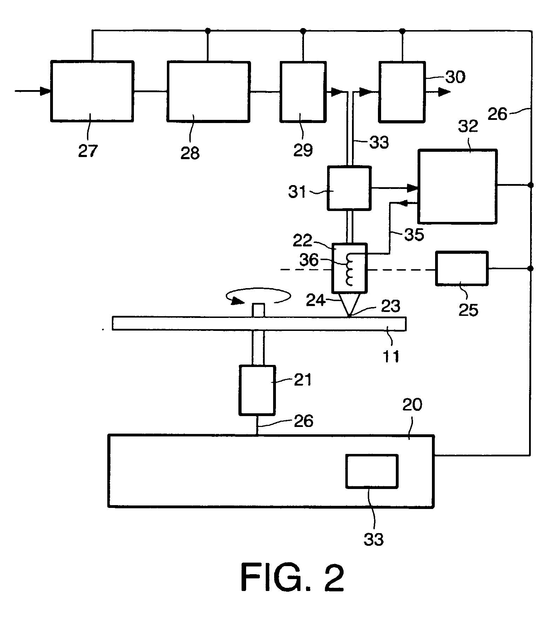

Figure 2 shows a recording device having label scribing. The device is provided with means for scanning a record carrier 11, which means include a drive unit 21 for rotating the record carrier 11, a head 22, a servo unit 25 for radially positioning the head 22 and a control unit 20. The head 22, also called OPU (Optical Pickup Unit), comprises an optical system of a known type for generating a radiation beam 24 guided through optical elements focused to a radiation spot 23. The radiation beam 24 is generated by a radiation source, e.g. a laser diode.

In a data recording mode the radiation spot is generated on a track of the information layer of the record carrier. In a label scribing mode the radiation spot is focused on the radiation sensitive layer on the label side of the medium 11. The head further comprises a focusing actuator 36 for focusing the beam to the radiation spot by moving the focus of the radiation beam 24 along the optical axis of said beam, and a radial actuator (not shown) for fine positioning of the spot 23 in a radial direction, e.g. coils for radially moving an optical element.

The radiation reflected from the medium is detected by a detector of a usual type in the head 22. A front-end unit 31 is coupled to the detector for providing detector signals based on radiation reflected from the track. The detector signals may include a main scanning signal 33 for reading the marks and sub-detector signals, for example a push-pull sub-detector signal based on the radiation as reflected from a left and right side of the track respectively and/or a satellite sub-detector signal based on the radiation as reflected from separate satellite spots positioned to the left and right side of the center of the track.

Detector signals for focusing are coupled to a focus unit 32 for controlling said focusing actuator 36 via a focus control signal 35 as described below. The main scanning signal 33 is processed by read processing unit 30 of a usual type including a demodulator, deformatter and output unit to retrieve the information. For the label mode the detector signals for focusing may include a sum reflection signal indicative of the total reflected radiation. For example for the sum signal the main scanning signal may be used, usually called central aperture signal (CA), or a combination of all sub-detector signals.

The control unit 20 controls the recording and retrieving of information and may be arranged for receiving commands from a user or from a host computer. The control unit 20 is connected via control lines 26, e.g. a system bus, to the other units in the device. The control unit 20 comprises control circuitry, for example a microprocessor, a program memory and interfaces for performing the procedures and functions as described below. The control unit 20 may also be implemented as a state machine in logic circuits.

For implementation of the focus unit 32 hardware and/or programmable signal processors may be used, such as a digital signal processor (DSP), while parts of the function may be implemented in a microprocessor.

The device is provided with recording means for recording information on record carriers of a writable or re-writable type. The recording means cooperate with the head 22 and front-end unit 31 for generating a write beam of radiation, and comprise write processing means for processing the input information to generate a write signal to drive the head 22, which write processing means comprise an input unit 27, a formatter 28 and a modulator 29. For writing information the power of the beam of radiation is controlled by modulator 29 to create the optically detectable marks in the recording layer.

In an embodiment the input unit 27 comprises compression means for input signals such as analog audio and/or video, or digital uncompressed audio/video. Suitable compression means are described for video in the MPEG standards, MPEG-1 is defined in ISO/IEC 11172 and MPEG-2 is defined in ISO/IEC 13818. The input signal may alternatively be already encoded according to such standards.

The control unit 20 is for controlling the recording in the recording mode. The control unit comprises a label control unit 33 for controlling the scribing in the label mode. Label data to be scribed may be provided via a host interface, or by user input, to the label control unit. In an embodiment a scanning device may be arranged only for label writing. The device is similar to the above device for recording, but the elements for data recording and retrieval are omitted.

In the label mode the record carrier is to be entered in the device with its label side towards the optical head to allow the beam of radiation to be focused to a scribing spot on the radiation sensitive layer. When a record carrier is entered, the user may give a command to engage the label mode. Alternatively the device may automatically detect if a suitable record carrier for label write has been entered, for example by detecting prescribed marks on a predefined location on the record carrier.

In practice the idea in label mode is to print labels at the non-data side of a CD or DVD disc. In both cases a CD laser in the optical head may be used to write the label. The CD spot is heavily aberrated with spherical aberration because the 1.2 mm polycarbonate substrate is not part of the light path anymore. Both radial and focus control is performed open loop.

An angular position of the head may be measured based on accurately controlling and measuring the rotation of the record carrier from a known reference position. Thereto the record carrier may have additional marks on the label side, such as a barcode, which may be detected by the head or by an additional sensor. Also, for example, the angular position may be based on signals from a Hall sensor coupled to a turntable motor, as described in a co-pending application of the current applicant (PHNL040725). A radial position of the head may be based on a stepping motor for equal sized, numbered, steps, or may be based on a rotation sensor coupled to a motor for moving the sledge along a spindle.

Focusing on the label might be performed using a method that is based on maximizing the reflectivity, which is measured from the so-called central aperture (CA) signal. This signal is sometimes called the sum signal. Basically it is the signal that describes the amount of light reflected from the disc. The signal can be generated from the sum of the detector segments corresponding to the main spot only. However, in a 3 spots system, it can also be based on the sum of the detector segments corresponding to the main spot + the sum of the detector segments corresponding with the satellite spots. However, the quality of such CA signal is low, a lot of noise is present in the signal. Therefore a lot of sampling or filtering is required to obtain reproducible results. An option would be to filter CA and then find the maximum. Unfortunately, filtering causes a delay in the filtered CA signal, which should be compensated for when finding the maximum.

In the method and apparatus according to the invention the CA signal is not directly filtered in the 'time domain', but a focus excitation signal is included in the focus control signal, and a deviation of the CA signal is correspondingly detected for calculating a center of gravity.

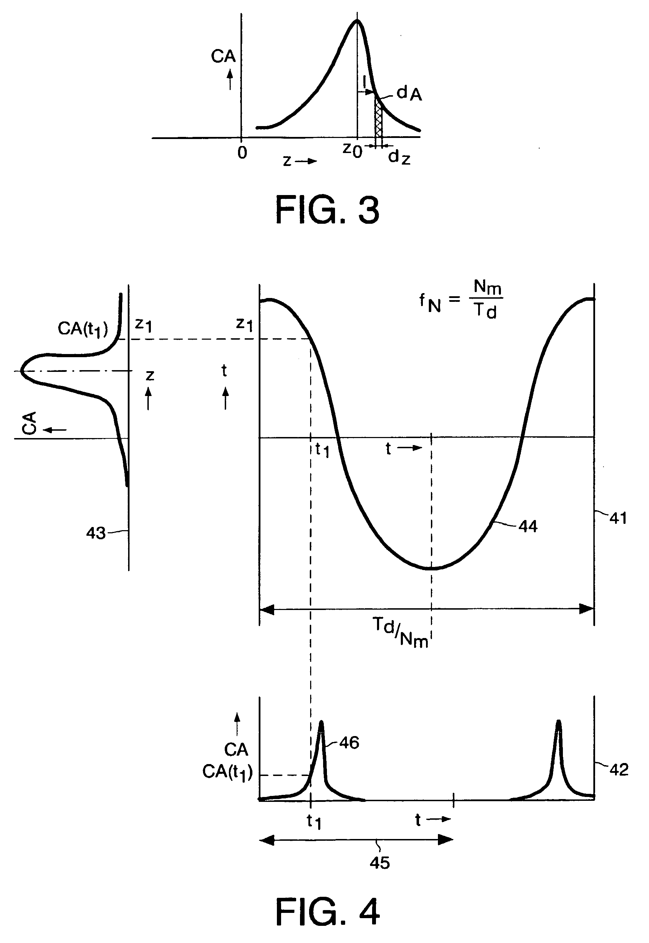

Figure 3 shows detecting a center of gravity. In a diagram along the vertical axis a detector signal CA is given as a function of z, CA(z), and on the horizontal axis the displacement of the focus z is given. For example the displacement z may be controlled by a focus excitation signal included in the focus control signal 35. Basically the center of gravity of the CA signal is measured; the result is called z0. The center of gravity implies that a weighted surface on both sides of z0 is equal, in which a surface S is calculated by integrating the surfaces dA multiplied with the distance *l* to z0 according to the following formula:

$$\sum M_{z0} = 0 \;\Rightarrow\; \int_S l \,.\, dA = 0 \Rightarrow \int_{-\infty}^{\infty} (z - z0).CA(z)\,dz = 0 \;\Rightarrow\; \int_{-\infty}^{\infty} z.CA(z)\,dz = z0.\int_{-\infty}^{\infty} CA(z)\,dz$$

which results in

$$z0 = \frac{\int_{-\infty}^{\infty} z.CA(z)\,dz}{\int_{-\infty}^{\infty} CA(z)\,dz}$$

For the focus excitation signal a periodic signal may be applied, in particular a substantially sinusoidal signal. In the current case:

$$z = A.\cos(2\pi f_N t) \Rightarrow dz = \frac{dz}{dt}.dt = -2\pi f_N A.\sin(2\pi f_N t)\,dt$$

If it is assumed that CA(z) = 0 for large out-of-focus values of z, e.g. z > A or z < -A, then the measurement principle in the time domain is according to

$$z_0 = \frac{\int_0^{T_P} z.CA(t)\cdot\sin(2\pi f_N t)\,dt}{\int_0^{T_P} CA(t)\cdot\sin(2\pi f_N t)\,dt} \quad \text{(called complete center of gravity formula COG)}$$

wherein $T_P$ is the measurement period related to the period of the periodic focus excitation signal, for example 0,5 times the period of a sinusoidal excitation signal. It is allowed to use a noisy, unfiltered and therefore fast, CA signal here, because the entire signal is integrated. This algorithm has advantages with respect to DSP and microprocessor implementation effort, calibration speed and simplicity. To perform such a measurement in a drive the focus actuator is moved with respect to the disc. In an embodiment of the invention, a linear saw tooth could be used. In that way a linear relation between z and time can be obtained which enables to perform the integration over z in time domain. However, a saw tooth will lead to higher harmonics in the actuator response, which will have negative influence on measurement accuracy and speed. Therefore, in another, preferred embodiment a flank of a harmonic signal to drive the focus actuator movement is used. As a result the relation between time and z is not linear any more. To perform the integrations over time instead of space the integrals have to be compensated with an additional harmonic $\sin(2\pi f_N t)$ as explained above. However, the inventors found out that this compensation is not always required for good convergence, and therefore detecting the center of gravity may be based on:

$$z_0 = \frac{\int_0^{T_P} z\cdot CA(t)\,dt}{\int_0^{T_P} CA(t)\,dt} \quad \text{(called simplified center of gravity formula SCOG)}$$

Figure 4 shows signals for detecting a center of gravity. In a first section 41 of the Figure a curve 44 gives the displacement z of a focus element in a drive with respect to time t on the horizontal axis due to a cosine shaped excitation signal of a frequency Nm/Td with a period of Td/Nm, i.e. the rotation period Td of a disc shaped medium divided by the number Nm to indicate the number of periods of the periodic focus excitation signal in one rotation. $T_P$ is a measurement period of 0,5 times the period of the periodic focus excitation signal, i.e. $T_P = 0{,}5 \cdot Td / Nm$. Second section 42 shows the detector signal CA, in particular it can be seen that in a first symmetrical interval 45, corresponding to a flank of the periodic focus excitation signal, provides a first curve 46 of the CA signal, including a value $CA(z_1)$ at time $t_1$ corresponding to displacement $z_1$ in section 41. Furthermore a third section 43 is shown corresponding to Figure 3.

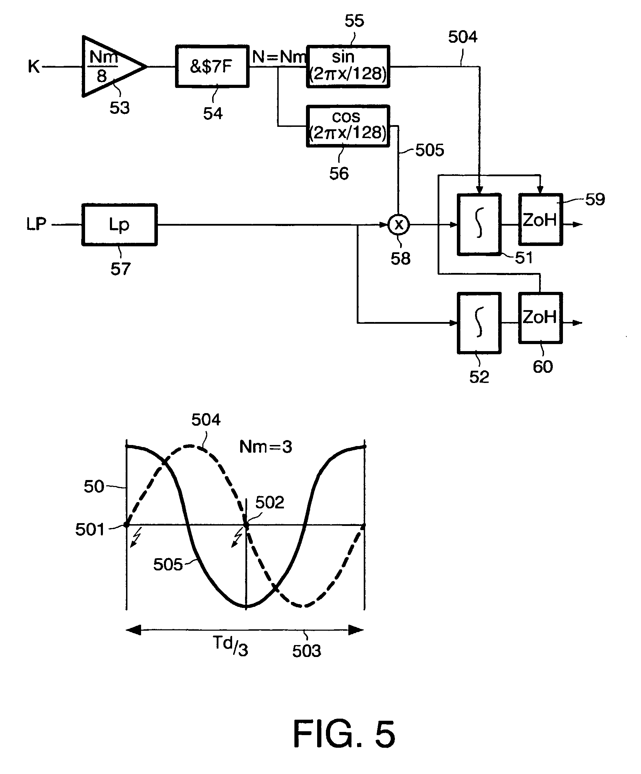

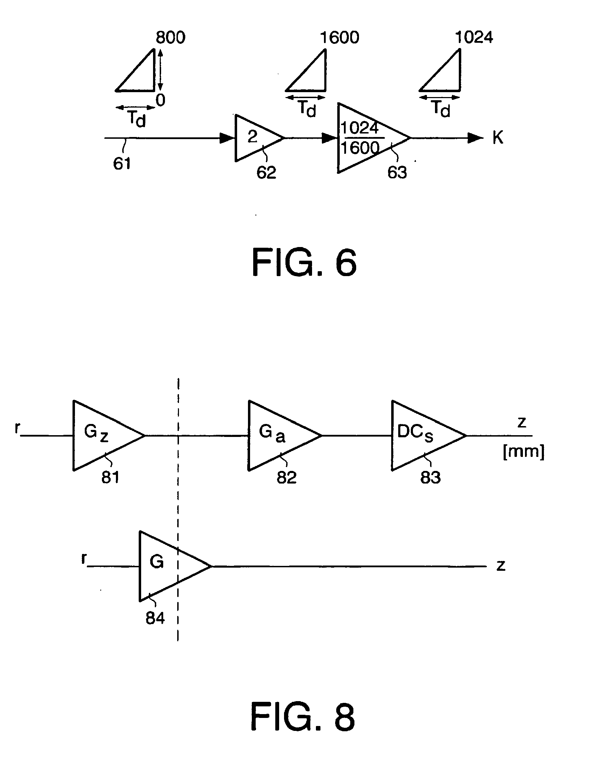

Figure 5 shows a detector signal processing part. The Figure shows a CA signal processing principle to be implemented in a drive. Two integrators 51,52 for determining a numerator and denominator corresponding to the formula SCOG above are clearly visible. The focus excitation signal is a cosine generated as follows. A sync signal k is generated corresponding to a rotation of the medium, e.g. a tacho signal or a sensor signal generated by a barcode on the medium passing along a sensor (see Figure 6). In a scaling unit 53 the sync signal k is scaled to get a preferred range, e.g. 0.. 1023 is scaled to 0..(128*Nm-1) by multiplying by Nm (a number of periods of the periodic focus excitation signal) and dividing by 8. In a logical unit 54 the signal is logically AND with 7F(hex) to get a sequence of Nm=8 saw tooth shaped pulses, which are converted using SIN unit 55 and COS unit 56 to sinusoidal signals (sine and cosine respectively), for example based on a table of 128 values corresponding to the logical scaling applied earlier in units 53 and 54..

In section 50 the Figure shows a measurement period 503, for example the period being Td/3, i.e. one third of the rotation period which has Nm = 3 periods of the focus excitation signal. The sine signal 504 is applied to detect the measurement interval (between zero values 501,502 of the sine signal 504) to reset the integrators 51,52 and hold units 59,60, and to generate an interrupt to indicate that a measurement period is completed. The cosine signal 505 is input to a multiplier 58, which further receives the detector signal CA via gain unit 57, which may have a low-pass filter function. The output of the multiplier 58 is integrated in integrator 51 and sampled in hold unit 59 to generate a numerator, while the detector signal CA is integrated in second integrator 52 and sampled in hold unit 60 to generate a denominator. Hence a zero crossing 501,502 in the sine of the same frequency is used to reset the integrators and store the result in the zero-order-hold units 59,60. When the integrators are reset an interrupt is generated to the microprocessor. This interrupt indicates that the microprocessor can sample the numerator and denominator.

If the measurement is carried out successfully, i.e. if the CA peak is on the flank, then dividing the numerator with the denominator gives the resulting z0. Note that if the focus set point is not within the range of the focus excitation signal, the CA signal will be about zero. This may be separately tested by the microprocessor before dividing, and larger amplitude for the focus excitation signal, or different global focus finding procedure, may be selected. Note that this division is preferably performed in the microprocessor and not in the DSP, where such a division is much more complex.

In an embodiment multiple measurements on one revolution are required, and the measurement harmonic should have a higher frequency then the disc rotational speed. To simplify signal processing further on, the measurement harmonic should be an integer number of the disc rotational speed Fd. In this case we choose this integer number to be N=8. On each cosine two measurement flanks are available. As a result we obtain 16 values for z0, equally distributed over one revolution. With these 16 values it is possible to obtain a DC value and 7 harmonics by an FFT procedure.

Figure 6 shows a tacho converter. A tacho signal 61 from a tacho sensor is scaled in multiplier unit 62 and divider unit 63 to generate the sync signal k coupled to an input of the detector signal processing part (see Figure 5). Hence the sine and cosine waves (generated in the detector signal processing part) are locked to the tacho signal corresponding with the discs angular position. The tacho signal may be generated by a pattern on a so-called LightScribe disc, which generates 800 bits per rotation. To simplify further processing the "800 bits" tacho signal is first converted to a "1024" bit tacho signal, as show in Figure 6.

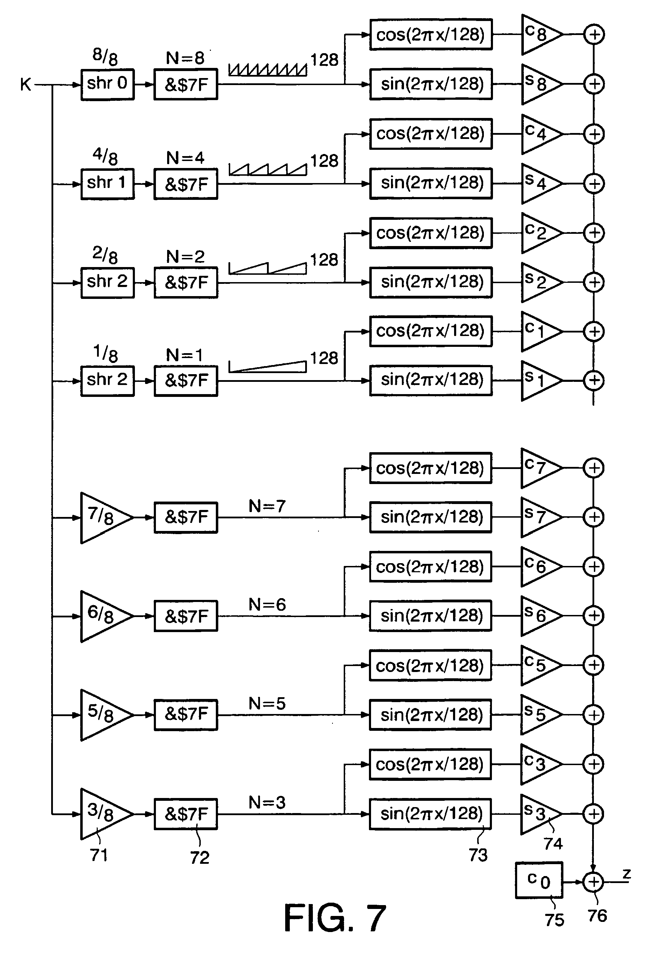

Figure 7 shows a feed forward block. The feed forward block is for generating a feed forward signal to be included as the focus correction signal in the focus control signal. For a rotating medium the output is locked to the rotation of the medium by the sync signal k. The feed forward block comprises a number of branches, each branch being tuned to a specific harmonic of the rotation frequency. The lowest branch starts with a multiplying unit 71 (k * 3/8) followed by a logical AND unit 72 (& 7Fhex) providing a third harmonic N = 3 , which is converted to sine and cosine signals using SIN and COS units 73, which are scaled by units 74 which contain the measured and calculated amplitude for the respective harmonic component. The scaled components are added in an adder chain 76 to generate the focus correction signal z. Note that a branch for the DC value of the focus correction signal is embodied only by a constant value unit 75. Hence in the feed-forward block it is possible to generate disc rotational speed harmonics with programmable amplitude and phase. The results of the FFT procedure based on the calculation of the samples $z_0$ described earlier are included in the amplitude registers of the corresponding harmonics. Note that no gain conversions are required here, the resulting amplitudes based on the FFT on the $z_0$ samples can directly be added to the feed-forward tables because all the 'z signals are in the same domain'.

Figure 8 shows a gain model. The gain model illustrates the conversion of a value r in a digital (calculation) domain to a movement z of the focus (in mm). In an upper section a model is given of an actual chain of elements in a focus control system. The value r is amplified by gain Gz in unit 81 to an output voltage Uout, which is subsequently amplified by Ga to a drive voltage Uact for an actuator by drive amplifier 82, and finally translated into a movement z in mm according to the sensitivity DCs of the actuator. In a lower section a corresponding gain model is given using a single gain stage G, having a gain G = DCs · Ga · Gz, hence z = G · r. Note that generally G depends on the components used in the drive, and on temperature, etc. In an embodiment z is generated in the digital domain by a digital signal $r = R \cdot \cos(2\pi f_N t)$. As a result $z = G \cdot r = G \cdot R \cdot \cos(2\pi f_N t)$, where R is an amplitude equal to R = A / G. The formula COG for z0 given above now becomes:

$$z_0 = \frac{G \cdot \int_{-GR}^{GR} R\cos(2\pi f_N t) \cdot CA(t) \cdot \sin(2\pi f_N t)\,dt}{\int_{-GR}^{GR} CA(t) \cdot \sin(2\pi f_N t)\,dt} = G \cdot r_0$$

The value of $r_0$ is calculated in the drive in the digital domain, and GR expresses the limits of the measurement period in time. Take N results $r_0$ -> $r_0$[1..16] (N=16). Now a corresponding number of amplitudes of z is calculated:

$Z_0$(1..16) = FFT ($z_0$[1..16]) = FFT( G · $r_0$[1..16]) = G · FFT($r_0$[1..16]) = G · $R_0$(1..16), wherein FFT is the Fast Fourier Transform, and $Z_0$(1..16) and $R_0$(1..16) indicate harmonics in the frequency domain (16 harmonics based on 16 samples, including mirror frequencies). Now we generate a signal based on the amplitudes $R_0$(1..16), i.e. $FFT^{-1}$ ($R_0$ (1..16)), wherein $FFT^{-1}$ is the inverse FFT.

This fortunately results in a signal z = $FFT^{-1}$ ($R_0$(1..16)) · G. Hence there is no need to take into account the value of G when generating the focus correction signal, because the values are calculated in the digital domain and are directly available as a feed forward signal r. Moreover, for generating the focus correction signal in practice, also a lower number of harmonics may be used, e.g. only 4 harmonics.

It is noted that the reflectivity of the medium to be scribed, for example LightScribe media, can vary from 1 to 10 %. To cope with this variation it is preferred to scale the front gain during the focus measurement. This scaling is required (at least) for two reasons: improper scaling will lead to quantization errors internally in the DSP, and improper scaling will lead to a false 'validation check' of a measurement point (the level check on the denominator, which is the integral over CA). Preferably this front scaling should be carried out once during disc recognition, e.g. using a conventional reflectivity measurement and correspondingly setting a front gain.

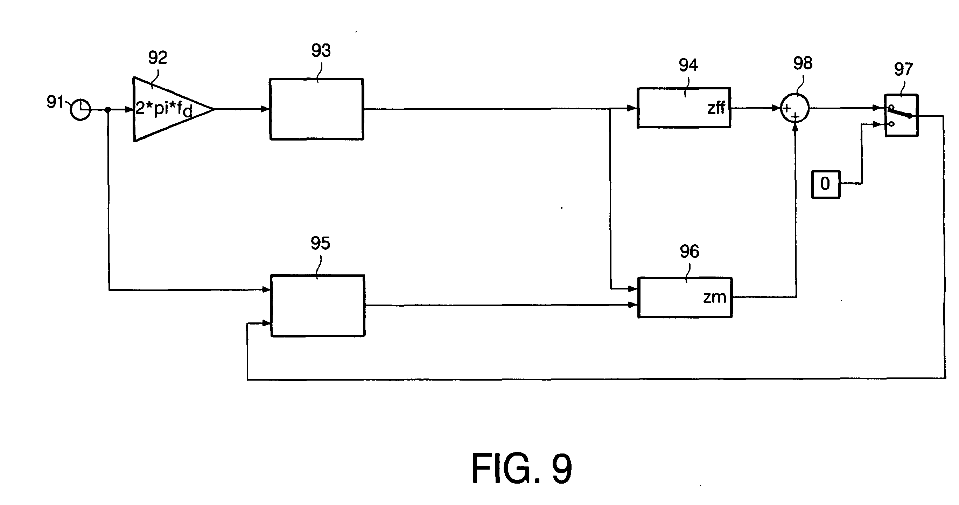

Figure 9 shows an overview of a focus system. The diagram is based on a simulation model of a drive, in which a clock generator 91 provides a clock signal, and a converter 92 converts the clock signal to simulate a drive control signal for rotating a medium, e.g. a Lightscribe medium, via a simulated tacho system 93. The tacho system 93 provides a signal k for synchronizing a feed forward signal generator 94 and a CA processing unit 96 for detecting a center of gravity in a detector signal (CA) with respect to a focus excitation signal (zm). The feed forward signal generator 94 may be implemented as described above with reference to Figure 7 and the CA processing unit 96 may be implemented as described above with reference to Figure 5. A switch 97 allows setting a constant value or, via adder unit 98, a focus correction signal (zff) from the feed forward signal generator 94 and a focus excitation signal (zm) from the CA processing unit 96 to an optical system 95, including a medium and head optics to be focused on the medium.

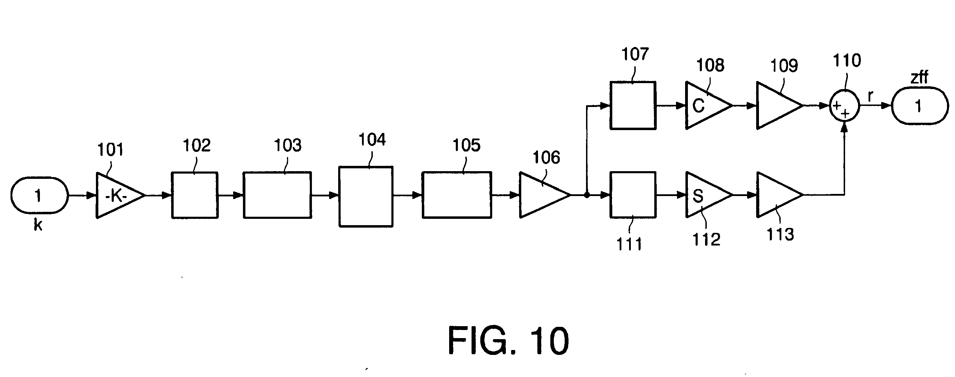

Figure 10 shows a digital implementation diagram of a feed forward branch. The feed forward branch, corresponding to the feed forward signal generator 94 in the simulation model of Figure 9, generates a focus correction signal (zff). A K unit 101 generates harmonics in combination with a floor unit 102, a format unit 103, and AND unit 104 which performs bitwise AND with 7Fhex, a second format unit 105 and a converter unit 106 which multiplies with 2*π/128. Subsequently the signal is coupled to cos unit 107 to be converted to a cosine and to sin unit 111 to be converted to a sine, which cosine is coupled to C unit 108 to be multiplied by a first parameter value, and which sine is coupled to S unit 112 to be multiplied by a second parameter value, which parameter values are calculated for the respective harmonic by the inverse FFT transform as explained above. The multiplied cosine and sine signals are converted by G unit 109 and G1 unit 113 respectively, and added in unit 110 to generate the focus correction signal (zff). It is noted that the feed forward branch may be similarly constructed for other harmonics that are included in the focus correction signal, or may be constructed for calculating a vector containing the selected harmonics.

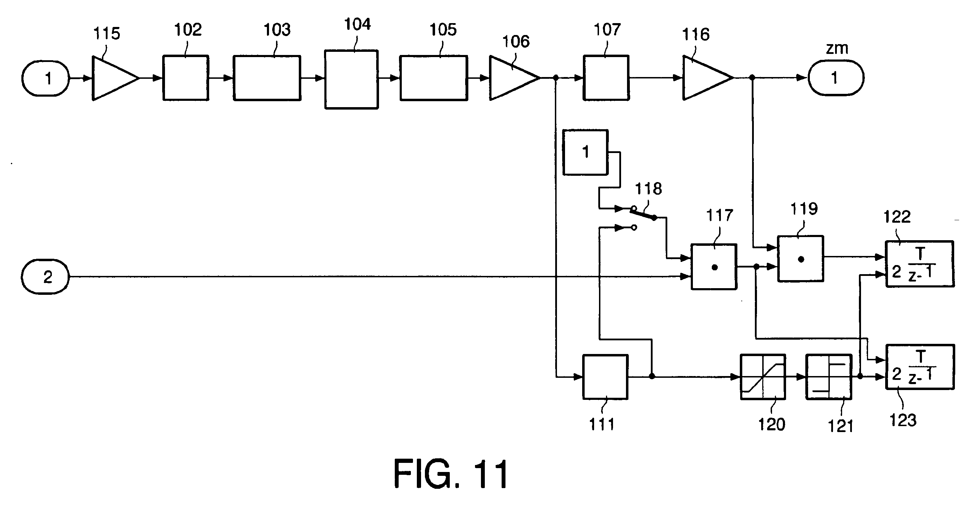

Figure 11 shows a digital implementation diagram of CA processing. The diagram corresponds to the CA processing unit 96 for detecting a center of gravity in a detector signal (CA) with respect to a focus excitation signal (zm). From a synchronization signal k which is generated with respect to a rotational position of a medium, a cosine and sine signal are generated similar to Figure 10 above, having a number of periods in one rotation of the medium determined by first unit 115, which for example multiplies by Nm/8 for providing 8 periods of the focus excitation signal as explained above. Subsequently the cosine signal is converted to the focus excitation signal (zm) by a multiplier unit 116, which multiplies by a constant value Cm. The sine signal is coupled to a saturation unit 120 and a sign unit 121 to provide a trigger signal when the sine signal has a zero crossing. Two different embodiments are shown as follows. A multiplier unit 117 receives either the sine signal or a constant value of one (i.e. effectively the multiplier may be omitted) to achieve that a CA input signal is either multiplied by the sine signal (as the complete COG formula for calculating the center of gravity requires), or to directly apply the CA signal (as the simplified formula SCOG requires), wherein the last embodiment in practice also converts to a sufficient level of focus. The (sine multiplied) CA signal is integrated in a lower discrete time integrator 123 to provide the denominator of the (COG or) SCOG formula. Further the (sine multiplied) CA signal is multiplied by the cosine in multiplier 119 and integrated in an upper discrete time integrator 122 to provide the numerator of the (COG or) SCOG formula. Both discrete time integrators 122,123 are reset by the trigger signal, which also indicates that the calculation of the center of gravity is to be performed on the values of the numerator and denominator.

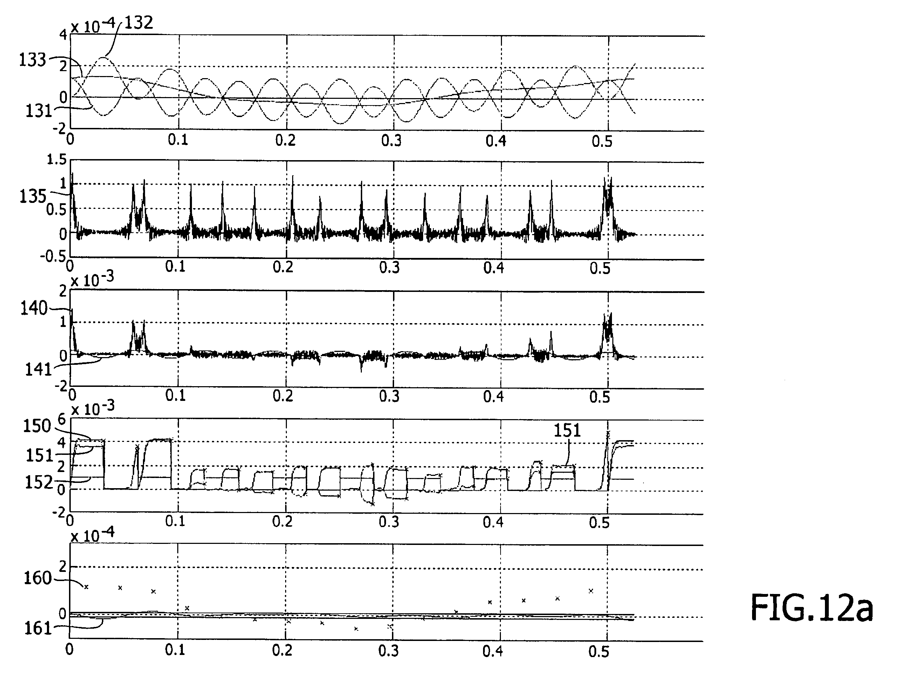

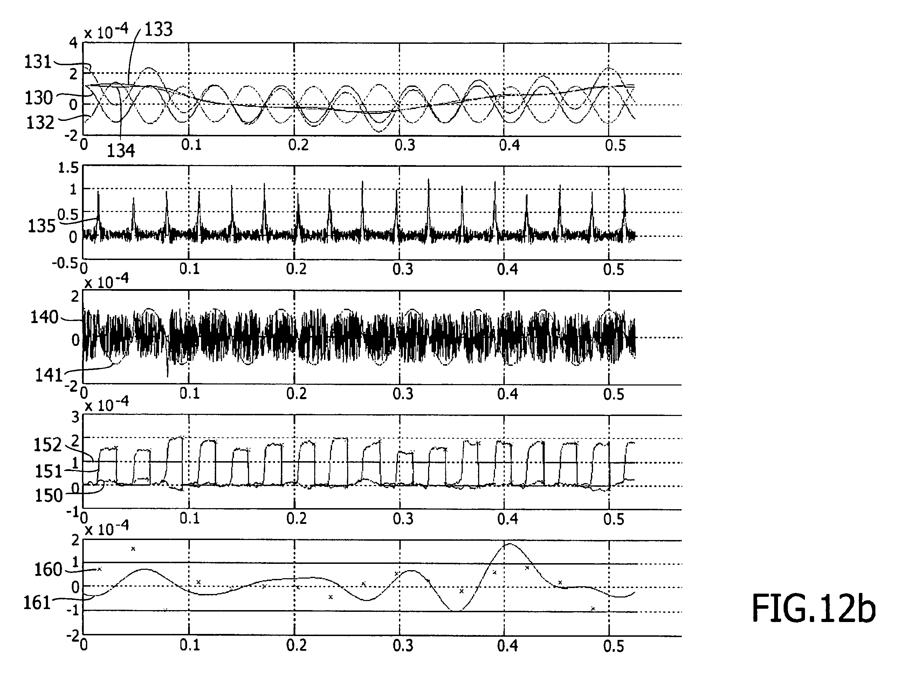

Figure 12a shows a first simulation result after one iteration. Figure 12b shows a first simulation result after two iterations.

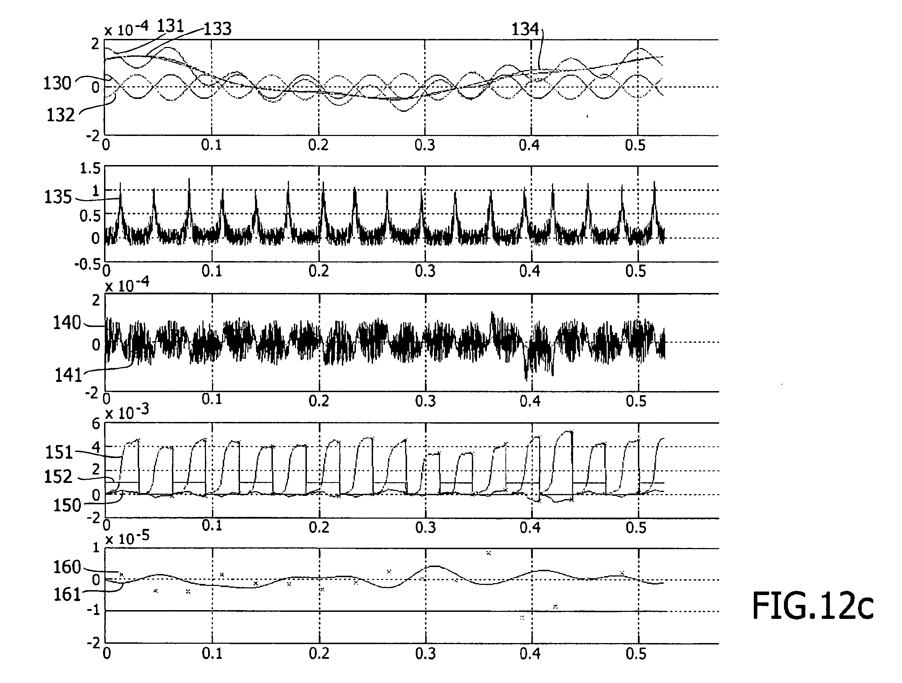

Figure 12c shows a first simulation result after four iterations, and after reduction of the focus excitation signal amplitude with a factor 2,5. In the Figures 12a-c the upper section shows values of the focus signals (in z domain), the second section shows the detector signal 135 (CA), the third section shows actual measured values 140 of an amplified detector signal ca*zm*10 and values 141 of the focus excitation signal $z_{meas}$. The third section shows values 150 of integrated value of the numerator of SCOG ($\int CA*z_{meas}*1e4$), and values 151 of integrated value of the denominator of SCOG ($\int CA$), and the trigger signal 152, which resets the integrators for each detection of the center of gravity. The bottom section shows values 160 of the outcome of SCOG ($\int CA*z_{meas} / \int CA$), and error values 161 after update indicating the remaining error signal of the focus point with respect to the disc surface in the simulation. Two straight lines are added indicating target values for the remaining error

In Figure 12a a first curve 131 indicates the focus control signal, i.e. the focus control signal including the focus excitation signal and the feed forward signal (i.e. the focus correction signal). Note that the feed forward signal is still zero due to the first iteration (i.e. first rotation of the medium) of the measurements. A second curve 133 indicates the actual deviation in z direction of the medium $z_{disc}$, i.e. the focus correction required. A third curve 132 indicates the focus error, i.e. difference of the focus control signal 131 and the actual deviation 133. In Figure 12b the same signals are shown, and additionally a focus excitation curve 130 is separately visible, while a feed forward signal curve 134 closely follows the actual deviation curve 133 of the medium $z_{disc}$. Note that the focus error curve 132 indicates now a focus error substantially complementary to the focus excitation signal. The further sections of Figures 12b and 12c show the same signals as in Figure 12a, after the respective amount of iterations. In Figure 12c the amplitude of the focus excitation signal $z_{meas}$ has been reduced, which causes a further improvement of the remaining focus error. The scale of the most sections (with exception of the middle section) has been doubled in Figure 12c with respect to Figures 12a and 12b. A lower amplitude of the focus excitation signal $z_{meas}$, in a situation that a roughly correct feed forward signal is available from earlier iterations for following larger actual z deviations of the medium, causes a more accurate sample value due to the fact that CA signal values at larger amplitude (i.e. more out of focus) do not contain much relevant signal elements, but substantially only noise. In the Figures 12a-c, fourth section, it is shown that the numerator value 150 is reduced with additional iterations, while the denominator value is 151 increases, clearly indicating a closer match of the feed forward signal and the actual deviation of the medium.

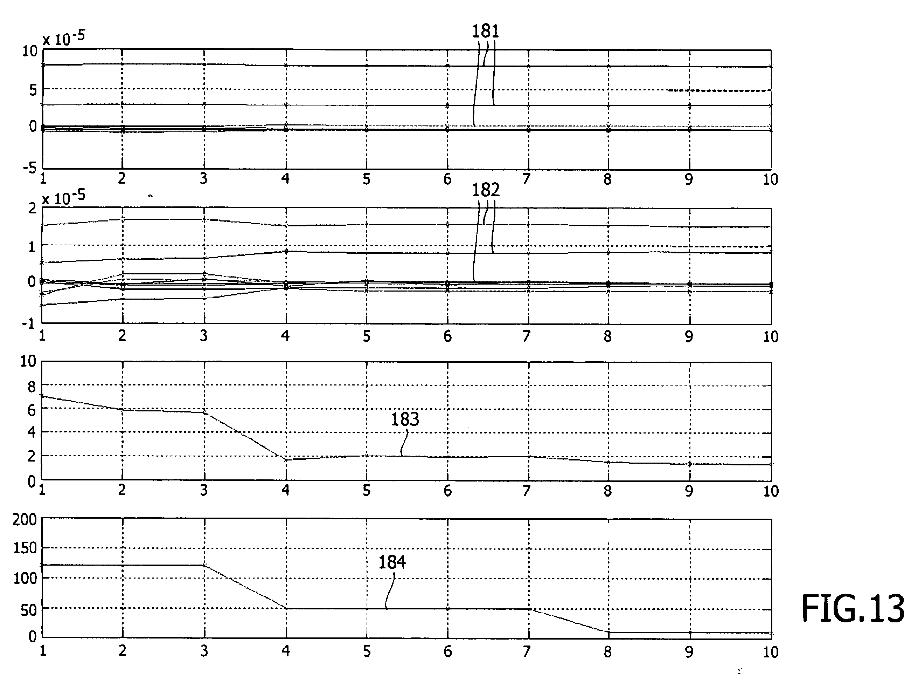

Figure 13 shows change in amplitude of harmonics corrected by the focus correction signal. The amplitude of harmonics is given over 10 iterations on the horizontal axis. The upper section shows various amplitudes 181 of cosine harmonics, and the second section shows amplitudes 182 of sine harmonics. The third section shows a calculated remaining root-mean-square error 183 between the actual deviation and the feed forward signal generated, the RMS value expressed in $\mu$m. The bottom section shows amplitudes 184 of the focus excitation signal $z_{meas}$ as value in $\mu$m. The amplitude of the focus excitation signal is reduced twice, finally being about 10% of the initial value. A relatively large initial value is effective to always detect large deviations of the medium, whereas a substantially reduced amplitude value in further iterations results in an accurate feed forward signal.

Although the invention has been elucidated with reference to the embodiments described above, it will be evident that other embodiments may be alternatively used to achieve the same object. The scope of the invention is therefore not limited to the embodiments described above, but can also be applied to all types of focusing methods which are based on the CA signal. Further, the invention is not limited to a particular type of label bearing medium.

In the method and apparatus according to the invention, the control scheme uses the CA signal to control focus. This CA signal is not directly filtered in the 'time domain'; instead, the center of gravity of the CA signal is measured; this allows the use of a noisy, unfiltered and therefore fast, CA signal here, because the entire signal is integrated over z. This algorithm has advantages with respect to DSP and microprocessor implementation effort, calibration speed, simplicity and a faster convergence, which reduces label printing time).

Furthermore, the focus control algorithm according to the invention can also be used to focus on conventional, non label-bearing media, for example to learn the shape of disc before you focusing on the disc. This can be an advantage in a system with a very low free working distance (also called flying height). In addition to scribing a visual label on optical discs having a sensitive printing layer, the focusing arrangement of the invention is also suitable for focusing a beam of radiation on other media such as rectangular optical cards, magneto-optical discs or any other system that applies scanning a medium via a beam of radiation. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software. Further, the scope of the invention is not limited to the embodiments, and the invention lies in each and every novel feature or combination of features described above.

## Claims

**1.** Device for scanning a medium (11) via a beam of radiation (24), the device comprising

- a head (22) for providing the beam of radiation, and for generating at least one detector signal in dependence of radiation reflected from the medium,
- focus means (32) for generating a focus control signal (35) for focusing the beam of radiation to a spot on the medium,
- the focus means being arranged
    - for including a focus excitation signal in the focus control signal (35) and
    - for generating a focus correction signal,

**characterized in that** the focus means are arranged for detecting a center of gravity in the detector signal (CA) in dependence of the focus excitation signal (z), the center of gravity being detected when a weighted surface of the detector signal at values of the focus excitation signal above the focus correction signal (z0) balances a weighted surface of the detector signal (CA) at values of the focus excitation signal below the focus correction signal (z0), the weight being the distance of the focus excitation signal (z) to the focus correction signal (z0).

**2.** Device as claimed in claim 1, wherein the device comprises means (33) for, in a label mode, scribing a visible label on the medium (11), the medium having a label side provided with a radiation sensitive layer for creating the visible label via the beam of radiation (24), and the head is for generating the spot on the radiation sensitive layer for scribing the visible label.

**3.** Device as claimed in claim 1 or 2, wherein the focus excitation signal is a periodic focus excitation signal, in a particular case the periodic focus excitation signal substantially being a sinusoidal signal.

**4.** Device as claimed in claim 3, wherein the device comprises means (21) for rotationally scanning the medium, and the focus means (32) are arranged
for adding the periodic focus excitation signal having a frequency and/or phase in dependence of said rotation, in a particular case the frequency being 8 times the frequency of the rotation.

**5.** Device as claimed in claim 1, wherein said detecting a center of gravity is based on an interval (45) of the excitation signal, which interval is symmetrical with respect to a zero crossing of the excitation signal.

**6.** Device as claimed in claim 1, wherein generating the focus correction signal based on said detecting a center of gravity comprises calculating

$$z_0 = \frac{\int_0^{T_P} z \, . CA(t) \cdot \sin(2\pi f_N t) \, dt}{\int_0^{T_P} CA(t) \cdot \sin(2\pi f_N t) \, dt}$$

wherein

- $z_0$ is a value for calculating the focus correction signal,
- $z = A \cdot \cos(2\pi f_N t)$ is the focus excitation signal, A is the amplitude of the focus excitation signal, $f_N$ is the frequency of the periodic focus excitation signal, $T_P$ is a measurement period related to the period of the periodic focus excitation signal and
- CA(t) is the detector signal.

**7.** Device as claimed in claim 1, wherein generating the focus correction signal based on said detecting a center of gravity comprises calculating

$$z_0 = \frac{\int_0^{T_P} z \cdot CA(t)\, dt}{\int_0^{T_P} CA(t)\, dt}$$

wherein

- $z_0$ is a value for calculating the focus correction signal,
- $z = A \cdot \cos(2\pi f_N t)$ is the focus excitation signal, A is the amplitude of the focus excitation signal, $f_N$ is the frequency of the periodic focus excitation signal, $T_P$ is a measurement period related to the period of the periodic focus excitation signal and
- CA(t) is the detector signal.

**8.** Device as claimed in claim 1, wherein the focus means (32) are arranged for generating the focus correction signal based on

- repeatedly, in iterations, scanning the medium,
- determining, during each iteration, a number of sample values based on said detecting the center of gravity, and
- generating a periodic focus correction signal based on said sample values.

**9.** Device as claimed in claim 8, wherein said generating the periodic focus correction signal is based on

- generating a DC value and harmonic periodic signals via a transformation of said sample values, and
- generating the periodic focus correction signal based on the DC value and harmonic periodic signals,
- in a particular case the transformation being a Fast Fourier Transform (FFT).

**10.** Device as claimed in claim 8, wherein said repeatedly scanning the medium includes

- determining a first iteration of the feed forward signal based on a first amplitude of the focus excitation signal,
- subsequently determining at least one further iteration of the periodic focus correction signal based on a second amplitude of the focus excitation signal,
- the second amplitude being substantially reduced with respect to the first amplitude.

**11.** Method of scanning a medium (11) via a beam of radiation (24), the method comprising

- generating at least one detector signal in dependence of radiation reflected from the medium,
- generating a focus control signal for focusing the beam of radiation to a spot on the medium,
- including a focus excitation signal in the focus control signal and
- generating a focus correction signal,

**characterized in that** said generating a focus correction signal comprises detecting a center of gravity in the detector signal (CA) in dependence of the focus excitation signal (z), the center of gravity being detected when a weighted surface of the detector signal at values of the focus excitation signal above the focus correction signal (z0) balances a weighted surface of the detector signal (CA) at values of the focus excitation signal below the focus correction signal (z0), the weight being the distance of the focus excitation signal (z) to the focus correction signal (z0).

**12.** Method as claimed in claim 11, wherein said scanning comprises scribing a visible label on the medium (11), the medium having a label side provided with a radiation sensitive layer for creating the visible label via the beam of radiation (24), and the spot is focused on the radiation sensitive layer for scribing the visible label.

## Patentansprüche

1. Anordnung zum Abtasten eines Mediums (11) über ein Strahlungsbündel (24), wobei diese Anordnung Folgendes umfasst:

   - einen Kopf (22) zum Schaffen des Strahlungsbündels und zum Erzeugen wenigstens eines Detektorsignals in Abhängigkeit von an dem Medium reflektierter Strahlung,
   - Fokussierungsmittel (32) zum Erzeugen eines Fokussteuersignals (35) zum Fokussieren des Strahlungsbündels zu einem Punkt auf dem Medium,

   wobei die Fokussierungsmittel dazu vorgesehen sind:

   - ein Fokuserregungssignal in dem Fokussteuersignal (35) zu enthalten und
   - ein Fokuskorrektursignal zu erzeugen, und zwar auf Basis der Detektion eines Schwerpunktes in dem Detektorsignal, wobei das Gewicht des Detektorsignal in Abhängigkeit von dem Fokuserregungssignals ermittelt wird.

2. Anordnung nach Anspruch 1, wobei die Anordnung Mittel (33) aufweist um in einer Etikettmode, ein sichtbares Etikett auf dem Medium (11) zu schreiben, wobei das Medium eine Etikettseite hat, die mit einer strahlungsempfindlichen Schicht versehen ist zum Schaffen des sichtbaren Etiketts mittels des Strahlungsbündels (24), und wobei der Kopf vorgesehen ist zum Erzeugen des Punktes auf der strahlungsempfindlichen Schicht zum Beschreiben des sichtbaren Etiketts.

3. Anordnung nach Anspruch 1 oder 2, wobei das Fokuserregungssignal ein periodisches Fokuserregungssignal ist, wobei in einem Spezialfall das periodische Fokuserregungssignal im Wesentlichen ein sinusförmiges Signal ist.

4. Anordnung nach Anspruch 3, wobei die Anordnung Mittel (21) aufweist zum drehenden Abtasten des Mediums, und wobei die Fokusmittel (32) dazu vorgesehen sind:

   - das periodische Fokuserregungssignal mit einer Frequenz und/oder Phase in Abhängigkeit von der genannten Drehung hinzuzufügen, wobei in einem Spezialfall die Frequenz der achtfachen Drehungsfrequenz entspricht.

5. Anordnung nach Anspruch 1, wobei die genannte Detektion eines Schwerpunktes auf einem Intervall (45) des Erregungssignals basiert ist, wobei dieses Intervall gegenüber einem Nulldurchgang des Erregungssignals symmetrisch ist.

6. Anordnung nach Anspruch 1, wobei die Erzeugung des Fokuskorrektursignals auf der genannten Detektion eines Schwerpunktes basiert ist, die nachfolgende Berechnung umfasst:

$$z_0 = \frac{\int_0^{T_P} z.CA(t)\cdot\sin(2\pi f_N t)\,dt}{\int_0^{T_P} CA(t)\cdot\sin(2\pi f_N t)\,dt}$$

   wobei

   - $z_0$ ein Wert zum Berechnen des Fokuskorrektursignals ist,
   - $z = A \cdot \cos(2\pi f_N t)$ das Fokuserregungssignal ist, A die Amplitude des Fokuserregungssignals ist, $f_N$ die Frequenz des periodischen Fokuserregungssignals ist, $T_p$ eine Messperiode gegenüber der Periode des periodischen Fokuserregungssignals ist und
   - CA(t) das Detektorsignal ist.

7. Anordnung nach Anspruch 1, wobei die Erzeugung des Fokuskorrektursignals, basiert auf der genannten Detektion des Schwerpunktes, die nachfolgende Berechnung umfasst:

$$z_0 = \frac{\int_0^{T_P} z \cdot CA(t)\, dt}{\int_0^{T_P} CA(t)\, dt}$$

wobei

- $z_0$ ein Wert zum Berechnen des Fokuskorrektursignals ist,
- $z = A \cdot \cos(2\pi f_N t)$ das Fokuserregungssignal ist, A die Amplitude des Fokuserregungssignals ist, $f_N$ die Frequenz des periodischen Fokuserregungssignals ist, $T_p$ eine Messperiode in Bezug auf der Periode des periodischen Fokuserregungssignals ist und
- CA(t) das Detektorsignal ist.

**8.** Anordnung nach Anspruch 1, wobei die Fokusmittel (32) zum Erzeugen des Fokuskorrektursignals ist, und zwar auf Basis der

- wiederholten Abtastung des Mediums,
- Ermittlung, während jeder Wiederholung, einer Anzahl Abtastwerte, und zwar auf Basis der genannten Detektion des Schwerpunktes, und
- Erzeugung eines periodischen Fokuskorrektursignals auf Basis der genannten Abtastwerte.

**9.** Anordnung nach Anspruch 8, wobei die genannte Erzeugung des periodischen Fokuskorrektursignals basiert auf

- der Erzeugung eines DC Wertes und harmonischer periodischer Signale über eine Transformation der genannten Abtastwerte, und
- der Erzeugung des periodischen Fokuskorrektursignals auf Basis des DC Wertes und harmonischer periodischer Signale,
- wobei in einem Spezialfall die Transformation eine schnelle Fourier Transformation (FFT) ist.

**10.** Anordnung nach Anspruch 8, wobei die genannte wiederholte Abtastung des Medium Folgendes umfasst:

- das Ermitteln einer ersten Wiederholung des Vorwärtsschubsignals auf Basis einer ersten Amplitude des Fokuserregungssignals,
- das nachfolgende Ermitteln wenigsten einer weiteren Wiederholung des periodischen Fokuskorrektursignals auf Basis einer zweiten Amplitude des Fokuserregungssignals,
- wobei die zweite Amplitude gegenüber der ersten Amplitude wesentlich reduziert ist.

**11.** Verfahren zum Abtasten eines Mediums (11) über eine Strahlungsbündel (24), wobei das Verfahren Folgendes umfasst:

- das Erzeugen wenigstens eines Detektorsignals in Abhängigkeit von am dem Medium reflektierter Strahlung,
- das Erzeugen eines Fokussteuersignals zum Fokussieren des Strahlungsbündels zu einem Punkt auf dem Medium,
- das Einschließen eines Fokuserregungssignals in das Fokussteuersignal und
- das Erzeugen eines Fokuskorrektursignals auf Basis der Detektion eines Schwerpunktes in dem Detektorsignal, wobei das Gewicht des Detektorsignals in Abhängigkeit von dem Fokuserregungssignal ermittelt wird.

**12.** Verfahren nach Anspruch 11, wobei die genannte Abtastung das Beschreiben eines sichtbaren Etiketts auf dem Medium (11) umfasst, wobei das Medium eine Etikettseite hat, die mit einer strahlungsempfindlichen Schicht versehen ist zum Schaffen des sichtbaren Etiketts mittels des Strahlungsbündels (24), und wobei der Punkt auf die strahlungsempfindliche Schicht fokussiert wird, und zwar zum Beschreiben des sichtbaren Etiketts.

## Revendications

1. Dispositif pour balayer un support (11) par un faisceau de rayonnement (24), le dispositif comprenant :

   - une tête (22) pour délivrer le faisceau de rayonnement et pour générer au moins un signal détecteur en fonction du rayonnement réfléchi par le support,
   - des moyens de focalisation (32) pour générer un signal de commande de focalisation (35) afin de focaliser le faisceau de rayonnement sur un point du support,
   - les moyens de focalisation étant aménagés
   - pour inclure un signal d'excitation de focalisation dans le signal de commande de focalisation (35) et
   - pour générer un signal de correction de focalisation,

   **caractérisé en ce que** les moyens de focalisation sont aménagés pour détecter un centre de gravité dans le signal détecteur (CA) en fonction du signal d'excitation de focalisation (z), le centre de gravité étant détecté lorsqu'une surface pondérée du signal détecteur à des valeurs du signal d'excitation de focalisation au-dessus du signal de correction de focalisation (z0) équilibre une surface pondérée du signal détecteur (CA) à des valeurs du signal d'excitation de focalisation en dessous du signal de correction de focalisation (z0), la pondération étant la distance entre le signal d'excitation de focalisation (z) et le signal de correction de focalisation (z0).

2. Dispositif selon la revendication 1, dans lequel le dispositif comprend des moyens (33) pour, en mode étiquette, tracer une étiquette visible sur le support (11), le support ayant une face étiquette munie d'une couche sensible au rayonnement pour créer l'étiquette visible à l'aide du faisceau de rayonnement (24), et la tête sert à générer le point sur la couche sensible au rayonnement pour tracer l'étiquette visible.

3. Dispositif selon la revendication 1 ou 2, dans lequel le signal d'excitation de focalisation est un signal d'excitation de focalisation périodique, dans un cas particulier le signal d'excitation de focalisation périodique étant sensiblement un signal sinusoïdal.

4. Dispositif selon la revendication 3, dans lequel le dispositif comprend des moyens (21) pour balayer en rotation le support et les moyens de focalisation (32) sont aménagés :

   pour ajouter le signal d'excitation de focalisation périodique ayant une fréquence et/ou une phase dépendant de ladite rotation, dans un cas particulier la fréquence étant 8 fois la fréquence de la rotation.

5. Dispositif selon la revendication 1, dans lequel ladite détection d'un centre de gravité est basée sur un intervalle (45) du signal d'excitation, lequel intervalle est symétrique par rapport à un passage par zéro du signal d'excitation.

6. Dispositif selon la revendication 1, dans lequel la génération du signal de correction de focalisation basé sur ladite détection d'un centre de gravité comprend le calcul suivant :

$$z_0 = \frac{\int_0^{T_P} z.CA(t) \cdot \sin(2\pi f_N t)\, dt}{\int_0^{T_P} CA(t) \cdot \sin(2\pi f_N t)\, dt}$$

   dans lequel :

   - $z_0$ est une valeur servant à calculer le signal de correction de focalisation,
   - $z = A \cdot \cos(2\pi f_N t)$ est le signal d'excitation de focalisation, A est l'amplitude du signal d'excitation de focalisation, $f_N$ est la fréquence du signal d'excitation de focalisation périodique, $T_p$ est une période de mesure se rapportant à la période du signal d'excitation de focalisation périodique et
   - CA(t) est le signal détecteur.

7. Dispositif selon la revendication 1, dans lequel la génération du signal de correction de focalisation basée sur ladite détection d'un centre de gravité comprend le calcul suivant :

$$z_0 = \frac{\int_0^{T_P} z \cdot CA(t)\, dt}{\int_0^{T_P} CA(t)\, dt}$$

dans lequel :

- $z_0$ est une valeur servant à calculer le signal de correction de focalisation,
- $z = A \cdot \cos(2\pi f_N t)$ est le signal d'excitation de focalisation, A est l'amplitude du signal d'excitation de focalisation, $f_N$ est la fréquence du signal d'excitation de focalisation périodique, $T_p$ est une période de mesure se rapportant à la période du signal d'excitation de focalisation périodique et
- CA(t) est le signal détecteur.

**8.** Dispositif selon la revendication 1, dans lequel les moyens de focalisation (32) sont aménagés pour générer le signal de correction de focalisation basé sur :

- le balayage répété, par itérations, du support,
- la détermination, au cours de chaque itération, d'un certain nombre de valeurs d'échantillons basées sur ladite détection du centre de gravité, et
- la génération d'un signal de correction de focalisation périodique basé sur lesdites valeurs d'échantillons.

**9.** Dispositif selon la revendication 8, dans lequel ladite génération du signal de correction de focalisation périodique est basé sur

- la génération d'une valeur DC et de signaux périodiques harmoniques via une transformation desdites valeurs d'échantillon et
- la génération du signal de correction de focalisation périodique basé sur la valeur DC et les signaux périodiques harmoniques,
- dans un cas particulier, la transformation étant une transformée de Fourier rapide (FFT).

**10.** Dispositif selon la revendication 8, dans lequel ledit balayage répété du support comprend :

- la détermination d'une première itération du signal à action directe basée sur une première amplitude du signal d'excitation de focalisation,
- ensuite la détermination d'au moins une autre itération du signal de correction de focalisation périodique basée sur la seconde amplitude du signal d'excitation de focalisation,
- la seconde amplitude étant sensiblement réduite par rapport à la première amplitude.

**11.** Procédé de balayage d'un support (11) par un faisceau de rayonnement (24), le procédé comprenant :

- la génération d'au moins un signal détecteur en fonction du rayonnement réfléchi par le support,
- la génération d'un signal de commande de focalisation pour focaliser le faisceau de rayonnement sur un point du support,
- l'inclusion d'un signal d'excitation de focalisation dans le signal de commande de focalisation et
- la génération d'un signal de correction de focalisation,

**caractérisé en ce que** ladite génération d'un signal de correction de focalisation comprend la détection d'un centre de gravité dans le signal détecteur (CA) en fonction du signal d'excitation de focalisation (z), le centre de gravité étant détecté lorsqu'une surface pondérée du signal détecteur à des valeurs du signal d'excitation de focalisation au-dessus du signal de correction de focalisation (z0) équilibre une surface pondérée du signal détecteur (CA) à des valeurs du signal d'excitation de focalisation en dessous du signal de correction de focalisation (z0), la pondération étant la distance entre le signal d'excitation de focalisation (z) et le signal de correction de focalisation (z0).

**12.** Procédé selon la revendication 11, dans lequel ledit balayage comprend le tracé d'une étiquette visible sur le support (11), le support ayant une face étiquette munie d'une couche sensible au rayonnement pour créer l'étiquette visible via le faisceau de rayonnement (24), et le point est focalisé sur la couche sensible au rayonnement pour le tracé de l'étiquette visible.

11
9
10
b
b
11
18
17
16
15
14

FIG.1a

FIG.1b

19
LABELLABEL
ABCDEFGH
11
10

FIG.1c

30
26
32
27
28
29
33
31
35
22
36
25
24
23
11
21
20
26
33

FIG. 2

CA
dA
0
z
z0
dz

FIG. 3

FIG. 4

K
Nm
8
53
&$7F
54
N=Nm
sin
(2πx/128)
55
cos
(2πx/128)
56
504
505
LP
Lp
57
X
58
ZoH
59
51
ZoH
60
52

504
Nm=3
50
501
502
505
Td/3
503

FIG. 5

800
0
$T_d$
1600
$T_d$
1024
$T_d$
2
1024
1600
K
61
62
63

FIG. 6

r
$G_z$
81
$G_a$
82
$DC_s$
83
z
[mm]
r
G
84
z

FIG. 8

K
8/8
shr 0
N=8
&$7F
128
cos(2πx/128)
sin(2πx/128)
c8
s8
4/8
shr 1
N=4
&$7F
128
cos(2πx/128)
sin(2πx/128)
c4
s4
2/8
shr 2
N=2
&$7F
128
cos(2πx/128)
sin(2πx/128)
c2
s2
1/8
shr 2
N=1
&$7F
128
cos(2πx/128)
sin(2πx/128)
c1
s1
7/8
&$7F
N=7
cos(2πx/128)
sin(2πx/128)
c7
s7
6/8
&$7F
N=6
cos(2πx/128)
sin(2πx/128)
c6
s6
5/8
&$7F
N=5
cos(2πx/128)
sin(2πx/128)
c5
s5
3/8
&$7F
N=3
cos(2πx/128)
sin(2πx/128)
c3
s3
71
72
73
74
c0
z
75
76

FIG. 7

91
92
2*pi*fd
93
94
zff
95
96
zm
98
+
+
97
0

FIG. 9

1
k
101
-K-
102
103
104
105
106
107
108
C
109
110
+
+
r
zff
1
111
112
S
113

FIG. 10

1
115
102
103
104
105
106
107
116
zm
1
2
1
118
117
119
111
120
121
122
123

FIG. 11

FIG.12a
132
133
131
135
140
141
150
151
152
160
161
x 10^-4
x 10^-3
0.1
0.2
0.3
0.4
0.5

131
130
132
133
134
135
140
141
152
151
150
160
161
x 10^-4
0.1
0.2
0.3
0.4
0.5

FIG.12b

130
131
132
133
134
135
140
141
150
151
152
160
161

FIG.12c

FIG.13
181
182
183
184
x 10-5
x 10-5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040037176 A
- US 6490234 B
- US 6192010 B
- US 20020191517 A